# EUROPEAN PATENT APPLICATION

(11) **EP 4 227 444 A1**
(43) Date of publication of application: **16.08.2023**
(21) Application number: 22779106.8
(22) Date of filing: 31.03.2022
(51) Int. Cl.: C25D 3/46, C25D 15/00

(54) **COMPOSITE DISPERSANT, PREPARATION METHOD THEREFOR, MIXED ELECTROPLATING SOLUTION, AND PREPARATION METHOD THEREFOR**

(30) Priority: 01.04.2021 CN 202110364998
(71) Applicant: Zhejiang Chint Electrics Co., Ltd., Yueqing, Zhejiang 325603 (CN)
(72) Inventor: SHEN, Qi, Yueqing, Zhejiang 325603 (CN); LIN, Junyu, Yueqing, Zhejiang 325603 (CN); ZHENG, Jianyong, Yueqing, Zhejiang 325603 (CN); HU, Yiming, Yueqing, Zhejiang 325603 (CN); WANG, Chuan, Yueqing, Zhejiang 325603 (CN); LIN, Rongzhen, Yueqing, Zhejiang 325603 (CN); JI, Shen, Yueqing, Zhejiang 325603 (CN); XU, Zhengli, Yueqing, Zhejiang 325603 (CN); ZHOU, Jinyu, Yueqing, Zhejiang 325603 (CN); ZENG, Lang, Yueqing, Zhejiang 325603 (CN)
(74) Representative: Petraz, Gilberto Luigi
(86) International application number: PCT/CN2022/084636
(87) International publication number: WO 2022/206926

(57) **Abstract**

The present invention relates to the field of material technologies, and more particularly to a compound dispersant which is composed of distilled water, a nonionic surfactant, an anionic surfactant and a wetting agent. The nonionic surfactant is a Tween compound, and the anionic surfactant is hydrocarbyl sulfate salts; and the compound dispersant can block or slow down agglomeration of graphene in a dispersion solution. The present invention further relates to a preparation method of the compound dispersant, which is simple to operate. The present invention further relates to a mixed electroplating solution containing the compound dispersant, in which the graphene is dispersed uniformly and stably. The present invention further relates to a preparation method of the mixed electroplating solution, in which graphene is distributed uniformly and stably.

## Description

### TECHNICAL FIELD

The present invention relates to the field of material technologies, and more particularly to a compound dispersant, a preparation method of the compound dispersant, a mixed electroplating solution including the compound dispersant, and a preparation method of the mixed electroplating solution.

### BACKGROUND ART

Graphene is a two-dimensional crystalline material with excellent electrical, thermal and mechanical properties, wherein single-layer graphene has the thermal conductivity as high as 5150 W(m K) and the carrier mobility up to 15000 cm²(V·S); and a metal-based graphene composite electrical contact material has superior electrical conductivity, wear resistance and thermal conductivity compared to other reinforced phase composite electrical contact materials. In addition, the graphene has good stability, without any dielectric corrosion problem after being compounded with a metal.

There is a strong π-π force between graphene layers, such that single-layer graphene dispersed in a dispersion solution is easily agglomerated to form graphite again, which seriously affects its performances. Due to special hydrophobic and oleophobic structures, it is in need of adding special surfactants and penetrants that the graphene can be stably dispersed in water or other solvents, such that the graphene can be electroplated on the metal surface to obtain the metal-based graphene composite electrical contact material.

### SUMMARY OF THE INVENTION

Objects of the present invention are to overcome the defects of the prior art and provide a compound dispersant that can block or slow down the agglomeration of graphene in a dispersion solution; provide a preparation method of the compound dispersant, which is simple to operate; also provide a mixed electroplating solution, in which graphene is dispersed uniformly and stably; and further provide a preparation method of the mixed electroplating solution, in which graphene is dispersed uniformly and stably.

To achieve the above object, the present invention adopts the following technical solution:
A compound dispersant, composed of distilled water, a nonionic surfactant, an anionic surfactant and a wetting agent, wherein the nonionic surfactant is a Tween compound, and the anionic surfactant is hydrocarbyl sulfate salts.

Further, the wetting agent comprises one or more of polyvinylpyrrolidone, dodecylphenol ethoxylate, sodium pyrrolidone carboxylate and macrogol 600.

Further, the Tween compound comprises one or more of Tween-20, Tween-40, Tween-60 and Tween-80.

Further, the hydrocarbyl sulfate salts includes one or more of sodium 2-ethylhexyl sulfate, sodium laureth sulfate, sodium lauryl ether sulfate, sodium fatty alcohol ethoxyethylene sulfate, glycerol fatty acid ester sulfate, sulfated sodium ricinoleate and sulfated fatty acid salt.

Further, a mass fraction of the nonionic surfactant in the compound dispersant is 1-10%.

Further, a mass fraction of the wetting agent in the compound dispersant is 1-10%.

Further, a mass fraction of the anionic surfactant in the compound dispersant is 1-10%.

A preparation method for a compound dispersant, comprising the following steps:
Step 1, adding an anionic surfactant and a nonionic surfactant to distilled water at a temperature of T0, and stirring for t0, 40°C≤ T0≤60°C, 5min≤t0≤15min, wherein the anionic surfactant is hydrocarbyl sulfate salts, and the nonionic surfactant is a Tween compound; and
Step 2, adding a wetting agent to a mixture obtained in Step 1, supplementing distilled water and stirring for t1 to obtain the compound dispersant, 5min≤t1≤15min, wherein in the compound dispersant, a mass fraction of the nonionic surfactant is 1-10%, a mass fraction of the anionic surfactant is 1-10%, a mass fraction of the wetting agent is 1-10%, and the balance is distilled water.

A mixed electroplating solution, comprising the compound dispersant, a silver-based aqueous solution and graphene, the silver-based aqueous solution comprises KCN and silver ions.

Further, in the silver-based aqueous solution, a mass-volume concentration of KCN is 90.0-200.0g/L.

Further, in the silver-based aqueous solution, a mass-volume concentration of silver ions is 15.0-50.0g/L.

Further, a mass-volume concentration of graphene in the mixed electroplating solution is 1.0-20.0g/L.

Further, a volume by volume concentration of the compound dispersant in the mixed electroplating solution is 15.0-35.0ml/L.

Further, a barrel plating current density of the mixed electroplating solution is 0.5-0.7A/dm².

Further, a rack plating current density of the mixed electroplating solution is 0.7-1.0A/dm².

A preparation method of a mixed electroplating solution, comprising the following steps:
S1, preparing a silver-based aqueous solution, wherein in the silver-based aqueous solution, a mass-volume concentration of KCN is 90.0-200.0g/L, and a mass-volume concentration of silver ions is 15.0-50.0g/L; and
S2, adding the compound dispersant and graphene sequentially to the mixture obtained in S1, and stirring to prepare the mixed electroplating solution, wherein in the mixed electroplating solution, a volume by volume concentration of the graphene is 1.0-20.0g/L, and a volume by volume concentration of the compound dispersant is 15.0-35.0ml/L.

According to the compound dispersant of the present invention, components cooperate synergistically, and lipophilic groups in the dispersants can be adsorbed on the surfaces of graphene particles to form a coating layer which can effectively block or slow down agglomeration of graphene in the dispersion solution. Moreover, hydrophilic groups in the dispersants are bonded with OH- ions in water to ensure that graphene is dispersed uniformly and stably in the dispersion solution.

The preparation method of the compound dispersant of the present invention is simple to operate; and the prepared compound dispersant can effectively block or slow down the agglomeration of graphene in the dispersion solution.

According to the mixed electroplating solution of the present invention, the compound dispersant can improve the dispersibility of the graphene in the mixed electroplating solution, and ensure that the graphene is dispersed stably and uniformly in the mixed electroplating solution, thus being conducive to improving the uniformity of graphene in a silver-graphene electroplating layer of an electroplated product and better exerting the conductivity and wear resistance of the graphene.

The preparation method of the mixed electroplating solution is simple to operate; and the graphene in the mixed electroplating solution prepared by the preparation method is distributed uniformly and stably, which is conducive to improving the conductivity and wear resistance of electroplated products of the mixed electroplating solution.

### DETAILED DESCRIPTIONS OF THE PREFERRED EMBODIMENTS

The specific embodiments of a compound dispersant and a preparation method therefor, and a mixed electroplating solution and a preparation method therefor of the present invention are further described below in conjunction with examples. The compound dispersant and the preparation method therefor, and the mixed electroplating solution and the preparation method therefor of the present invention are not limited to the description of the following examples.

A compound dispersant of the present invention, composed of distilled water, a nonionic surfactant, an anionic surfactant and a wetting agent, wherein the nonionic surfactant is a Tween compound, and the anionic surfactant is hydrocarbyl sulfate salts.

According to the compound dispersant of the present invention, components cooperate synergistically, and lipophilic groups in the dispersants can be adsorbed on the surfaces of graphene particles to form a coating layer which can effectively block or slow down agglomeration of graphene in the dispersion solution. Moreover, hydrophilic groups in the dispersants are bonded with OH- ions in water to ensure that graphene is dispersed uniformly and stably in the dispersion solution.

A preparation method for a compound dispersant, comprising the following steps:
Step 1, adding an anionic surfactant and a nonionic surfactant to distilled water at a temperature of T0, and stirring for t0, 40°C≤T0≤60°C, 5min≤t0≤15min, wherein the anionic surfactant is hydrocarbyl sulfate salts, and the nonionic surfactant is a Tween compound; and
Step 2, adding a wetting agent to a mixture obtained in Step 1, supplementing with distilled water and stirring for t1 to obtain the compound dispersant, 5min≤t1≤15min, wherein in the compound dispersant, a mass fraction of the nonionic surfactant is 1-10%, a mass fraction of the anionic surfactant is 1-10%, a mass fraction of the wetting agent is 1-10%, and the balance is distilled water.

The preparation method of the compound dispersant of the present invention is simple to operate; and the prepared compound dispersant can effectively block or slow down the agglomeration of graphene in the dispersion solution.

Specifically, for example, when pre-preparing a compound dispersant with a mass of M kg, the required mass of distilled water is calculated. In Step 1, 15-40% (15%, 25%, 30%, 35% or 40%) of the required mass of distilled water is taken, heated to T0, and added with the anionic surfactant and the nonionic surfactant and stirred for t0. In Step 2, adding the wetting agent to the mixture obtained in Step 1, supplementing with distilled water, and stirring for t1 to obtain M kg of the compound dispersant.

The present invention discloses a mixed electroplating solution, comprising the compound dispersant, a silver-based aqueous solution and graphene, the silver-based aqueous solution comprises KCN and silver ions.

According to the mixed electroplating solution of the present invention, the compound dispersant can improve the dispersibility of the graphene in the mixed electroplating solution, and ensure that the graphene is dispersed stably and uniformly in the mixed electroplating solution, thus being conducive to improving the uniformity of graphene in a silver-graphene electroplating layer of an electroplated product and better exerting the conductivity and wear resistance of the graphene.

A preparation method of a mixed electroplating solution of the present invention, comprising the following steps:
S1, preparing a silver-based aqueous solution, wherein in the silver-based aqueous solution, a mass-volume concentration of KCN is 90.0-200.0g/L, and a mass-volume concentration of silver ions is 15.0-50.0g/L; and
S2, adding the compound dispersant and graphene sequentially to the mixture obtained in S1, and stirring to prepare the mixed electroplating solution, wherein in the mixed electroplating solution, a volume by volume concentration of the graphene is 1.0-20.0g/L, and a volume by volume concentration of the compound dispersant is 15.0-35.0ml/L.

The preparation method of the mixed electroplating solution is simple to operate; and the graphene in the mixed electroplating solution prepared by the preparation method is distributed uniformly and stably, which is conducive to improving the conductivity and wear resistance of electroplated products of the mixed electroplating solution.

The compound dispersant and the preparation method therefor are further described below in conjunction with specific examples.

The following is an embodiment of the compound dispersant of the present invention.

A compound dispersant of the present invention, composed of distilled water, a nonionic surfactant, an anionic surfactant and a wetting agent, wherein the nonionic surfactant is a Tween compound, and the anionic surfactant is hydrocarbyl sulfate salts.

Further, the wetting agent comprises one or more of polyvinylpyrrolidone, dodecylphenol ethoxylate, sodium pyrrolidone carboxylate and macrogol 600.

Further, a mass fraction of the wetting agent in the compound dispersant is 1-10%. Further, the mass fraction of the wetting agent in the compound dispersant is 1%, 2%, 3%, 4%, 5%, 6%, 7%, 8%, 9% or 10%.

Further, the Tween compound comprises one or more of Tween-20, Tween-40, Tween-60 and Tween-80.

Further, a mass fraction of the nonionic surfactant in the compound dispersant is 1-10%. Further, the mass fraction of the nonionic surfactant in the compound dispersant is 1%, 2%, 3%, 4%, 5%, 6%, 7%, 8%, 9% or 10%.

Further, the hydrocarbyl sulfate salts includes one or more of sodium 2-ethylhexyl sulfate, sodium laureth sulfate, sodium lauryl ether sulfate, sodium fatty alcohol ethoxyethylene sulfate, glycerol fatty acid ester sulfate, sulfated sodium ricinoleate and sulfated fatty acid salt.

Further, a mass fraction of the anionic surfactant in the compound dispersant is 1-10%. Further, the mass fraction of the anionic surfactant in the compound dispersant is 1%, 2%, 3%, 4%, 5%, 6%, 7%, 8%, 9% or 10%.

The following is an embodiment of the preparation method of the compound dispersant of the present invention.

The preparation method of the compound dispersant of the present invention includes the following operation steps.

Step 1, adding an anionic surfactant and a nonionic surfactant to distilled water at a temperature of T0, and stirring for t0, 5min≤t0≤15min, 40°C≤T0≤60°C, wherein the anionic surfactant is hydrocarbyl sulfate salts, and the nonionic surfactant is a Tween compound; and

Further, T0 is 40°C, 45°C, 50°C, 55°C or 60°C.

Further, t0 is 5min, 6min, 7min, 8min, 9min, 10min, 11min, 12min, 13min, 14min or 15min.

Step 2, adding a wetting agent to a mixture obtained in Step 1, supplementing with distilled water and stirring for t1 to obtain the compound dispersant, 5min≤t1≤15min, wherein in the compound dispersant, a mass fraction of the nonionic surfactant is 1-10%, a mass fraction of the anionic surfactant is 1-10%, a mass fraction of the wetting agent is 1-10%, and the balance is distilled water.

Further, t1 is 5min, 6min, 7min, 8min, 9min, 10min, 11min, 12min, 13min, 14min or 15min.

The followings are specific examples of the compound dispersant and the preparation method therefor of the present invention.

### Example 1:

The compound dispersant in this example is composed of distilled water, a nonionic surfactant, an anionic surfactant and a wetting agent, wherein the nonionic surfactant includes Tween-20; the anionic surfactant includes sodium 2-ethylhexyl sulfate; the wetting agent includes polyvinylpyrrolidone; and in the compound dispersant, a mass fraction of the Tween-20 is 5%, a mass fraction of the sodium 2-ethylhexyl sulfate is 5%, and a mass fraction of the polyvinylpyrrolidone is 5%.

The preparation method of the compound dispersant in this example includes the following steps:
Step 1, adding the anionic surfactant (sodium 2-ethylhexyl sulfate) and the nonionic surfactant (Tween-20) to distilled water at a temperature of 50°C, and stirring for 10min; and
Step 2, adding the wetting agent (polyvinylpyrrolidone) to the mixture obtained in Step 1, supplementing with distilled water, and stirring for 10min to obtain the compound dispersant.

### Example 2:

The compound dispersant in this example is composed of distilled water, a nonionic surfactant, an anionic surfactant and a wetting agent, wherein the nonionic surfactant includes Tween-40; the anionic surfactant includes sodium laureth sulfate; the wetting agent includes sodium pyrrolidone carboxylate; and in the compound dispersant, a mass fraction of the Tween-40 is 5%, a mass fraction of the sodium laureth sulfate is 6%, and a mass fraction of the sodium pyrrolidone carboxylate is 5%.

The preparation method of the compound dispersant in this example includes the following steps:
Step 1, adding the anionic surfactant (sodium laureth sulfate) and the nonionic surfactant (Tween-40) to distilled water at a temperature of 50°C, and stirring for 10min; and
Step 2, adding the wetting agent (sodium pyrrolidone carboxylate) to the mixture obtained in Step 1, supplementing with distilled water, and stirring for 10min to obtain the compound dispersant.

### Example 3:

The compound dispersant in this example is composed of distilled water, a nonionic surfactant, an anionic surfactant and a wetting agent, wherein the nonionic surfactant includes Tween-80; the anionic surfactant includes glycerol fatty acid ester sulfate; the wetting agent includes macrogol 600; and in the compound dispersant, a mass fraction of the Tween-80 is 5%, a mass fraction of the glycerol fatty acid ester sulfate is 7%, and a mass fraction of the macrogol 600 is 4%.

The preparation method of the compound dispersant in this example includes the following steps:
Step 1, adding the anionic surfactant (glycerol fatty acid ester sulfate) and the nonionic surfactant (Tween-80) to distilled water at a temperature of 50°C, and stirring for 10min; and
Step 2, adding the wetting agent (polyethylene glycol 600) to the mixture obtained in Step 1, supplementing with distilled water, and stirring for 10min to obtain the compound dispersant.

### Example 4:

The compound dispersant in this example is composed of distilled water, a nonionic surfactant, an anionic surfactant and a wetting agent, wherein the nonionic surfactant includes Tween-60; the anionic surfactant includes fatty alcohol polyoxyethylene ether sodium sulfate; the wetting agent includes polyvinylpyrrolidone; and in the compound dispersant, a mass fraction of the Tween-60 is 5%, a mass fraction of the fatty alcohol polyoxyethylene ether sodium sulfate is 5%, and a mass fraction of the polyvinylpyrrolidone is 4%.

The preparation method of the compound dispersant in this example includes the following steps:
Step 1, adding the anionic surfactant (fatty alcohol polyoxyethylene ether sodium sulfate) and the nonionic surfactant (Tween-60) to distilled water at a temperature of 50°C, and stirring for 10min; and
Step 2, adding the wetting agent (polyvinylpyrrolidone) to the mixture obtained in Step 1, supplementing with distilled water, and stirring for 10min to obtain the compound dispersant.

### Example 5:

The compound dispersant in this example is composed of distilled water, a nonionic surfactant, an anionic surfactant and a wetting agent, wherein the nonionic surfactant includes Tween-20; the anionic surfactant includes sodium lauryl ether sulfate; the wetting agent includes dodecylphenol ethoxylate; and in the compound dispersant, a mass fraction of the Tween-20 is 1%, a mass fraction of the sodium lauryl ether sulfate is 1%, and a mass fraction of the the dodecylphenol ethoxylate is 1%.

The preparation method of the compound dispersant in this example includes the following steps:
Step 1, adding the anionic surfactant (sodium polyoxyethylene dodecyl ether sulfonate) and the nonionic surfactant (Tween-20) to distilled water at a temperature of 40°C, and stirring for 5min; and
Step 2, adding the wetting agent (dodecylphenol ethoxylate) to the mixture obtained in Step 1, supplementing with distilled water, and stirring for 5min to obtain the compound dispersant.

### Example 6:

The compound dispersant in this example is composed of distilled water, a nonionic surfactant, an anionic surfactant and a wetting agent, wherein the nonionic surfactant includes Tween-80; the anionic surfactant includes sulfated sodium ricinoleate; the wetting agent includes polyvinylpyrrolidone; and in the compound dispersant, a mass fraction of the Tween-80 is 10%, a mass fraction of the sulfated sodium ricinoleate is 10%, and a mass fraction of the polyvinylpyrrolidone is 10%.

The preparation method of the compound dispersant in this example includes the following steps:
Step 1, adding the anionic surfactant (castor-oil sulfated sodium) and the nonionic surfactant (Tween-80) to distilled water at a temperature of 60°C, and stirring for 15min; and
Step 2, adding the polyvinylpyrrolidone to the mixture obtained in Step 1, supplementing with distilled water, and stirring for 15min to obtain the compound dispersant.

### Example 7:

The compound dispersant in this example is composed of distilled water, nonionic surfactants, anionic surfactants and wetting agents, wherein the nonionic surfactant include Tween-20 and Tween-60; the anionic surfactant includes sodium laureth sulfate and sodium lauryl ether sulfate; the wetting agent include polyvinylpyrrolidone and sodium pyrrolidone carboxylate; and in the compound dispersant, a mass fraction of the Tween-20 is 2%, a mass fraction of the Tween-60 is 4%, a mass fraction of the sodium laureth sulfate is 3%, a mass fraction of the sodium lauryl ether sulfate is 4%, a mass fraction of the polyvinylpyrrolidone is 2%, and a mass fraction of the sodium pyrrolidone carboxylate is 4%.

The preparation method of the compound dispersant in this example includes the following steps:
Step 1, adding the anionic surfactants (sodium laureth sulfate and sodium lauryl ether sulfate) and the nonionic surfactants (Tween-20 and Tween-60) to distilled water at a temperature of 55°C, and stirring for 13min; and
Step 2, adding the wetting agents (polyvinylpyrrolidone and sodium pyrrolidone carboxylate) to the mixture obtained in Step 1, supplementing with distilled water, and stirring for 13min to obtain the compound dispersant.

### Example 8:

The compound dispersant in this example is composed of distilled water, nonionic surfactants, anionic surfactants and wetting agents, wherein the nonionic surfactant include Tween-40, Tween-60 and Tween-80; the anionic surfactant include sodium 2-ethylhexyl sulfate, glycerol fatty acid ester sulfate and sulfated sodium ricinoleate; the wetting agents include macrogol 600, polyvinylpyrrolidone and sodium pyrrolidone carboxylate; and in the compound dispersant, a mass fraction of the Tween-40 is 1%, a mass fraction of the Tween-60 is 1%, a mass fraction of the Tween-80 is 2%, a mass fraction of the sodium 2-ethylhexyl sulfate is 2%, a mass fraction of the glycerol fatty acid ester sulfate is 1%, a mass fraction of the sulfated sodium ricinoleate is 1%, a mass fraction of the macrogol 600 is 1%, a mass fraction of the polyvinylpyrrolidone is 2%, and a mass fraction of the sodium pyrrolidone carboxylate is 1%.

The preparation method of the compound dispersant in this example includes the following steps:
Step 1, adding the anionic surfactants (sodium 2-ethylhexyl sulfate, glycerol fatty acid ester sulfate and sulfated sodium ricinoleate) and the nonionic surfactants (Tween-40, Tween-60 and Tween-80) to distilled water at a temperature of 55°C, and stirring for 13min; and
Step 2, adding the wetting agents (polyethylene glycol 600, polyvinylpyrrolidone and sodium pyrrolidone carboxylate) to the mixture obtained in Step 1, supplementing with distilled water, and stirring for 13min to obtain the compound dispersant.

The following is an embodiment of a mixed electroplating solution of the present invention.

The mixed electroplating solution of the present invention includes the compound dispersant, a silver-based aqueous solution and graphene, wherein the silver-based aqueous solution includes KCN and silver ions.

Further, a mass-volume concentration of KCN in the silver-based aqueous solution is 90.0-200.0g/L. Further, the mass-volume concentration of KCN in the silver-based aqueous solution is 90.0g/L, 100.0g/L, 110.0g/L, 120.0g/L, 130.0g/L, 140.0g/L, 150.0g/L, 160.0g/L, 170.0g/L, 180.0g/L, 190.0g/L or 200.0g/L.

Further, a mass-volume concentration of silver ions in the silver-based aqueous solution is 15.0-50.0g/L. Further, the mass-volume concentration of silver ions in the silver-based aqueous solution is 15.0g/L, 20.0g/L, 25.0g/L, 30.0g/L, 35.0g/L, 40.0g/L, 45.0g/L or 50.0g/L.

Further, the silver ions are provided by an aqueous solution prepared by electrolysis of a silver plate.

Further, a mass-volume concentration of graphene in the mixed electroplating solution is 1.0-20.0g/L Further, the mass-volume concentration of graphene in the mixed electroplating solution is 1.0g/L, 1.5g/L, 2.0g/L, 2.5g/L, 3.0g/L, 4.0g/L, 5.0g/L, 6.0g/L, 7.0g/L, 8.0g/L, 9.0g/L, 10.0g/L, 11.0g/L, 12.0g/L, 13.0g/L, 14.0g/L, 15.0g/L, 16.0g/L, 17.0g/L, 18.0g/L, 19.0g/L or 20.0g/L.

Further, a volume by volume concentration of the compound dispersant in the mixed electroplating solution is 15-35ml/L. Further, the volume by volume concentration of the compound dispersant in the mixed electroplating solution is 15ml/L, 20ml/L, 25ml/L, 30ml/L or 35ml/L.

Further, a barrel plating current density of the mixed electroplating solution is 0.5-0.7A/dm². Further, the rolling plating current density of the mixed electroplating solution is 0.5A/dm², 0.6A/dm² or 0.7A/dm².

Further, a rack plating current density of the mixed electroplating solution is 0.7-1.0A/dm². Further, the rack plating current density of the mixed electroplating solution is 0.7A/dm², 0.8A/dm², 0.9A/dm² or 1.0A/dm².

The following is an embodiment of a preparation method of the mixed electroplating solution of the present invention.

A preparation method of a mixed electroplating solution, comprising the following steps:
S1, preparing a silver-based aqueous solution, wherein in the silver-based aqueous solution, a mass-volume concentration of KCN is 90.0-200.0g/L, and a mass-volume concentration of silver ions is 15.0-50.0g/L; and
S2, adding the compound dispersant and graphene sequentially to the mixture obtained in S1, and stirring to prepare the mixed electroplating solution, wherein in the mixed electroplating solution, a mass-volume concentration of the graphene is 1.0-20.0g/L, and a volume by volume concentration of the compound dispersant is 15.0-35.0ml/L.

The followings are specific embodiments of the mixed electroplating solutions of the present invention, which are all prepared by the preparation methods of the mixed electroplating solutions of the present invention.

### Example 9:

The mixed electroplating solution of this example includes the compound dispersant of Example 1, a silver-based aqueous solution and the graphene, wherein the silver-based aqueous solution includes KCN and silver ions; in the silver-based aqueous solution, a mass-volume concentration of KCN is 150g/L, and a mass-volume concentration of the silver ions is 30g/L; in the mixed electroplating solution, a mass-volume concentration of the graphene is 2.0g/L; and a volume by volume concentration of the compound dispersant is 30ml/L.

Further, a barrel plating current density of the mixed electroplating solution in this example is 0.6A/dm².

Further, a rack plating current density of the mixed electroplating solution in this example is 0.8A/dm².

### Example 10:

The mixed electroplating solution of this example includes the compound dispersant of Example 2, a silver-based aqueous solution and the graphene, wherein the silver-based aqueous solution includes KCN and silver ions; in the silver-based aqueous solution, a mass-volume concentration of KCN is 150g/L, and a mass-volume concentration of the silver ions is 30g/L; in the mixed electroplating solution, a mass-volume concentration of the graphene is 2.0g/L; and a volume by volume concentration of the compound dispersant is 30ml/L.

Further, a barrel plating current density of the mixed electroplating solution in this example is 0.6A/dm².

Further, a rack plating current density of the mixed electroplating solution in this example is 0.8A/dm².

### Example 11:

The mixed electroplating solution of this example includes the compound dispersant of Example 3, a silver-based aqueous solution and the graphene, wherein the silver-based aqueous solution includes KCN and silver ions; in the silver-based aqueous solution, a mass-volume concentration of KCN is 150g/L, and a mass-volume concentration of the silver ions is 30g/L; in the mixed electroplating solution, a mass-volume concentration of the graphene is 2.0g/L; and a volume by volume concentration of the compound dispersant is 30ml/L.

Further, a barrel plating current density of the mixed electroplating solution in this example is 0.6A/dm².

Further, a rack plating current density of the mixed electroplating solution in this example is 0.8A/dm².

### Example 12:

The mixed electroplating solution of this example includes the compound dispersant of Example 4, a silver-based aqueous solution and the graphene, wherein the silver-based aqueous solution includes KCN and silver ions; in the silver-based aqueous solution, a mass-volume concentration of KCN is 150g/L, and a mass-volume concentration of the silver ions is 30g/L; in the mixed electroplating solution, a mass-volume concentration of the graphene is 3.0g/L; and a volume by volume concentration of the compound dispersant is 30ml/L.

Further, a barrel plating current density of the mixed electroplating solution in this example is 0.6A/dm².

Further, a rack plating current density of the mixed electroplating solution in this example is 0.8A/dm².

### Example 13:

The mixed electroplating solution of this example includes the compound dispersant of Example 5, a silver-based aqueous solution and the graphene, wherein the silver-based aqueous solution includes KCN and silver ions; in the silver-based aqueous solution, a mass-volume concentration of KCN is 90g/L, and a mass-volume concentration of the silver ions is 15g/L; in the mixed electroplating solution, a mass-volume concentration of the graphene is 1.0g/L; and a volume by volume concentration of the compound dispersant is 35ml/L.

Further, a barrel plating current density of the mixed electroplating solution in this example is 0.7A/dm².

Further, a rack plating current density of the mixed electroplating solution in this example is 1.0A/dm².

### Example 14:

The mixed electroplating solution of this example includes the compound dispersant of Example 6, a silver-based aqueous solution and the graphene, wherein the silver-based aqueous solution includes KCN and silver ions; in the silver-based aqueous solution, a mass-volume concentration of KCN is 200g/L, and a mass-volume concentration of the silver ions is 50g/L; in the mixed electroplating solution, a mass-volume concentration of the graphene is 20.0g/L; and a volume by volume concentration of the compound dispersant is 15ml/L.

Further, a barrel plating current density of the mixed electroplating solution in this example is 0.5A/dm².

Further, a rack plating current density of the mixed electroplating solution in this example is 0.7A/dm².

### Example 15:

The mixed electroplating solution of this example includes the compound dispersant of Example 7, a silver-based aqueous solution and the graphene, wherein the silver-based aqueous solution includes KCN and silver ions; in the silver-based aqueous solution, a mass-volume concentration of KCN is 120g/L, and a mass-volume concentration of the silver ions is 25g/L; in the mixed electroplating solution, a mass-volume concentration of the graphene is 1.5g/L; and a volume by volume concentration of the compound dispersant is 25ml/L.

Further, a barrel plating current density of the mixed electroplating solution in this example is 0.6A/dm².

Further, a rack plating current density of the mixed electroplating solution in this example is 0.9A/dm².

### Example 16:

The mixed electroplating solution of this example includes the compound dispersant of Example 8, a silver-based aqueous solution and the graphene, wherein the silver-based aqueous solution includes KCN and silver ions; in the silver-based aqueous solution, a mass-volume concentration of KCN is 150g/L, and a mass-volume concentration of the silver ions is 30g/L; in the mixed electroplating solution, a mass-volume concentration of the graphene is 3.0g/L; and a volume by volume concentration of the compound dispersant is 30ml/L.

Further, a barrel plating current density of the mixed electroplating solution in this example is 0.6A/dm².

Further, a rack plating current density of the mixed electroplating solution in this example is 0.8A/dm².

### Blank electroplating solution:

The blank electroplating solution includes a silver-based aqueous solution and graphene, wherein the silver-based aqueous solution includes KCN and silver ions; in the silver-based aqueous solution, a mass-volume concentration of KCN is 150g/L, and a mass-volume concentration of silver ions is 30g/L; and in the mixed electroplating solution, a mass-volume concentration of the graphene is 2.0g/L;

Further, a barrel plating current density of the blank electroplating solution is 0.6A/dm².

Further, a rack plating current density of the blank electroplating solution is 0.8A/dm².

The present invention further discloses an electroplating operation method, which is used for performing an electroplating operation using the mixed electroplating solution and including the following steps: cleaning a product to be electroplated, putting the cleaned product to be electroplated into a potassium cyanide solution for cyanide activation, pre-plating sliver to the activated product to be electroplated, putting the pre-silver-eplated product to be electroplated into the mixed electroplating solution for electroplating, and washing the electroplated product for multiple times after the electroplating is completed.

Table 1: the followings are physical parameters of the mixed electroplating solution and the blank electroplating solution (without adding the compound dispersant of the present invention) of the respective embodiments and experimental data of electroplated products of respective examples and electroplated products electroplated by the blank electroplating solution (the larger an absolute value of zeta potential value, the better the dispersion of graphene particles in the mixed electroplating solution; the smaller a diameter value under particle size detection, the better the dispersion of graphene in the mixed electroplating solution; and the larger the wear resistance value, the better the wear resistance of the electroplated product):

**Table 1:**

| Serial No. | Zeta potential, /mV | Diameter under particle size detection, /d.nm | Wear resistance |
|---|---|---|---|
| Blank electroplating solution | -34.9 | 704.9 | 32.3 |
| Example 9 | -46.9 | 563.2 | 526.4 |
| Example 10 | -45.9 | 578.6 | 520.7 |
| Example 11 | -48.1 | 546.3 | 569.8 |
| Example 12 | -47.3 | 547.8 | 574.6 |
| Example 13 | -43.1 | 589.4 | 519.9 |
| Example 14 | -49.7 | 530.9 | 601.2 |
| Example 15 | -47.7 | 546.5 | 589.1 |
| Example 16 | -48.0 | 544.6 | 596.4 |

| | | | |
|---|---|---|---|
| Note: the wear resistance refers to an average number of bearable times per micron, with a unit /time. | | | |

Through the above experimental data, it is shown that the mixed electroplating solution of the present invention ensures the stable and uniform distribution of graphene in the mixed electroplating solution, which can significantly improve the uniformity of graphene distribution in the silver-graphene electroplating layer, thereby significantly improving the product performances (including electrical conductivity, thermal conductivity, wear resistance, etc.) of the electroplated products, wherein the wear resistance of the electroplated products can be improved by more than 5 times.

The above content is a further detailed description of the present invention in conjunction with specific preferred embodiments, but it cannot be regarded that the specific embodiments of the present invention are limited to these descriptions. For a person of ordinary skill in the art to which the present invention belongs, without departing from the idea of the present invention, a number of simple deductions or replacements may be made, which should be regarded as falling within the protection scope of the present invention.

## Claims

1. A compound dispersant, composed of distilled water, a nonionic surfactant, an anionic surfactant and a wetting agent, wherein the nonionic surfactant is a Tween compound, and the anionic surfactant is hydrocarbyl sulfate salts.

2. The compound dispersant as claimed in claim 1, wherein the wetting agent comprises one or more of polyvinylpyrrolidone, dodecylphenol ethoxylate, sodium pyrrolidone carboxylate and macrogol 600.

3. The compound dispersant as claimed in claim 1, wherein the Tween compound comprises one or more of Tween-20, Tween-40, Tween-60 and Tween-80.

4. The compound dispersant as claimed in claim 1, wherein the hydrocarbyl sulfate salts includes one or more of sodium 2-ethylhexyl sulfate, sodium dodecyl sulfate, sodium lauryl ether sulfate, sodium fatty alcohol ethoxyethylene sulfate, glycerol fatty acid ester sulfate, sulfated sodium ricinoleate and sulfated fatty acid salt.

5. The compound dispersant as claimed in claim 1, wherein a mass fraction of the nonionic surfactant in the compound dispersant is 1-10%.

6. The compound dispersant as claimed in claim 1, wherein a mass fraction of the wetting agent in the compound dispersant is 1-10%.

7. The compound dispersant as claimed in claim 1, wherein a mass fraction of the anionic surfactant in the compound dispersant is 1-10%.

8. A preparation method for a compound dispersant, comprising the following steps:
Step 1, adding an anionic surfactant and a nonionic surfactant to distilled water at a temperature of T0, and stirring for t0, 40°C≤ T0≤60°C, 5min≤t0≤15min, wherein the anionic surfactant is hydrocarbyl sulfate salts, and the nonionic surfactant is a Tween compound; and
Step 2, adding a wetting agent to a mixture obtained in Step 1, supplementing with distilled water and stirring for t1 to obtain the compound dispersant, 5min≤t1≤15min, wherein in the compound dispersant, a mass fraction of the nonionic surfactant is 1-10%, a mass fraction of the anionic surfactant is 1-10%, a mass fraction of the wetting agent is 1-10%, and the balance is distilled water.

9. A mixed electroplating solution, comprising the compound dispersant as claimed in any one of claims 1 to 7, a silver-based aqueous solution and graphene, the silver-based aqueous solution comprises KCN and silver ions.

10. The mixed electroplating solution as claimed in claim 9, wherein in the silver-based aqueous solution, a mass-volume concentration of KCN is 90.0-200.0g/L, and a mass-volume concentration of silver ions is 15.0-50.0g/L.

11. The mixed electroplating solution as claimed in claim 9, wherein a mass-volume concentration of graphene in the mixed electroplating solution is 1.0-20.0g/L; and a volume by volume concentration of the compound dispersant in the mixed electroplating solution is 15.0-35.0ml/L.

12. The mixed electroplating solution as claimed in claim 9, wherein a barrel plating current density of the mixed electroplating solution is 0.5-0.7A/dm³;
and a rack plating current density of the mixed electroplating solution is 0.7-1.0A/ dm³.

13. A preparation method of a mixed electroplating solution, comprising the following steps:
S1, preparing a silver-based aqueous solution, wherein in the silver-based aqueous solution, a mass-volume concentration of KCN is 90.0-200.0g/L, and a mass-volume concentration of silver ions is 15.0-50.0g/L; and
S2, adding the compound dispersant as claimed in any one of claims 1 to 7 and graphene sequentially to the mixture obtained in S1, and stirring to prepare the mixed electroplating solution, wherein in the mixed electroplating solution, a volume by volume concentration of the graphene is 1.0-20.0g/L, and a volume by volume concentration of the compound dispersant is 15.0-35.0ml/L.
